# EUROPÄISCHE PATENTSCHRIFT

(11) **EP 4 210 884 B1**
(45) Veröffentlichungstag und Bekanntmachung des Hinweises auf die Patenterteilung: **07.08.2024**
(21) Anmeldenummer: 21777215.1
(22) Anmeldetag: 08.09.2021
(51) Int. Cl.: C21D 1/34, C21D 1/42, C21D 1/62, C21D 8/00

(54) **VERFAHREN ZUM ENDLOSEN GIESSEN UND ANSCHLIESSENDEN FLACHWALZEN EINES STAHLBANDES**
METHOD FOR THE CONTINUOUS CASTING AND SUBSEQUENT ROLLING FLAT OF A STEEL STRIP
PROCÉDÉ DE COULÉE CONTINUE ET DE LAMINAGE ULTÉRIEUR D'UN FEUILLARD D'ACIER

(30) Priorität: 08.09.2020 DE 102020211273
(43) Veröffentlichungstag der Anmeldung: 19.07.2023
(73) Patentinhaber: SMS Group GmbH, 40237 Düsseldorf (DE)
(72) Erfinder: HOF, Hartmut, 57339 Erndtebrück (DE); SCHUSTER, Ingo, 47877 Willich (DE); PETERS, Matthias, 57223 Kreuztal (DE)
(74) Vertreter: Kross, Ulrich
(86) Internationale Anmeldenummer: PCT/EP2021/074656
(87) Internationale Veröffentlichungsnummer: WO 2022/053482

(56) Entgegenhaltungen:
- EP-A1- 2 340 897
- WO-A1-96/01710
- WO-A2-2007/051521

## Beschreibung

Die vorliegende Erfindung betrifft ein Verfahren zum endlosen Gießen und anschließenden Flachwalzen eines Stahlbandes mit einer austenitischen und/oder ferritischen Gefügestruktur und einer Dicke von kleiner 0.80 mm, besonders bevorzugt mit einer Dicke im Bereich von 0.40 bis 0.60 mm.

Solche Stahlbänder werden üblicherweise durch Kaltwalzen von Warmbändern in separaten Kaltwalzwerken erzeugt, so dass zur Herstellung solcher dünnen Stahlbänder mit einer austenitischen und/oder ferritischen Gefügestruktur mindestens zwei oder drei Bearbeitungsschritte notwendig sind.

Aus der deutschen Veröffentlichung DE 11 2013 000841 T5 ist zwar eine Anlage zur Herstellung dünner Stahlbänder bekannt, in dem ein Gussband mit einer Dicke von 1 bis 5 mm gegossen und direkt in einer Warmwalzstraße zu einem dünnen Stahlband warmgewalzt werden kann, allerdings ermöglicht eine solche Anlage nicht die gezielte Herstellung von Stahlbändern mit einer austenitischen und/oder ferritischen Gefügestruktur. WO2007/051521A2 offenbart ein weiteres Dokument des Standes der Technik, das sich auf dasselbe technische Gebiet bezieht. Es offenbart ein Verfahren und eine Fertigwalzstraße zum Warmwalzen von Eingangsmaterial.

Vor diesem Hintergrund liegt der vorliegenden Erfindung die Aufgabe zu Grunde, eine gegenüber dem Stand der Technik verbessertes Verfahren bereitzustellen, insbesondere ein Verfahren bereitzustellen, das die Herstellung eines Stahlbandes mit einer austenitischen und/oder ferritischen Gefügestruktur und einer Dicke von kleiner 0.80 mm ermöglicht.

### Beschreibung der Erfindung

Erfindungsgemäß wird die Aufgabe durch ein Verfahren mit den Merkmalen des Patentanspruchs 1 gelöst.

Die vorliegende Erfindung sieht ein Verfahren zur Herstellung eines Stahlbandes mit einer austenitischen und/oder ferritischen Gefügestruktur und einer Dicke von kleiner 0.80 mm vor, wobei zunächst in einer Gießeinrichtung ein Stahlrohband mit einer Dicke im Bereich von 1.50 bis 4.0 mm kontinuierlich gegossen wird, und sodann direkt im austenitischen und/oder im ferritischen Gefügebereich, vorzugsweise oberhalb einer Temperatur von mindestens 700 °C, mittels zumindest eines mit der Gießeinrichtung gekoppelten Warmwalzgerüstes zu dem Stahlband warm vorgewalzt wird.

Erfindungsgemäß wird das sodann im austenitischen und/oder im ferritischen Gefügebereich warm vorgewalzte Stahlband über zumindest ein Walzmodul, welches in dieser Reihenfolge eine Kühleinrichtung, eine Heizeinrichtung sowie ein Warmwalzgerüst aufweist, und unmittelbar nach dem mit der Gießeinrichtung gekoppelten Warmwalzgerüst angeordnet ist, austenitisch und/oder ferritisch zu dem Stahlband warm fertiggewalzt.

Das Verfahren ermöglicht zum einen eine höhere Wirtschaftlichkeit bei der Warmbanderzeugung, insbesondere bei der Erzeugung von ultradünnem Warmband, da aufgrund der Einsparung von Prozessschritten die Lieferzeiten deutlich reduziert, die Investitionskosten verringert und wesentliche Energieeinsparungen erzielt werden können.

Mit der und/oder-Kombination in dem Begriff "austenitische und/oder ferritische Gefügestruktur" wird im Sinne der vorliegenden Erfindung verstanden, dass das herzustellende Stahlband am Ende des Prozesses eine austenitische oder eine ferritische Gefügestruktur aufweist und während der Herstellung austenitisch als auch ferritisch gewalzt werden kann. Mit anderen Worten weist das herzustellende Stahlband am Ende des Prozesses im Wesentlichen keine Mischstruktur aus einem austenitischen und ferritischen Gefüge auf.

Mit dem Begriff "ultradünnes Warmband" wird im Sinne der vorliegenden Erfindung ein Stahlband verstanden, welches eine Dicke von kleiner 0.80 mm, besonders bevorzugt eine Dicke im Bereich von 0.40 bis 0.60 mm aufweist. Ganz besonders bevorzugt weist das Stahlband, welches eine austenitische und/oder ferritische Gefügestruktur aufweist, eine Dicke von 0.4 mm auf.

Zudem kann über das zumindest eine Walzmodul gezielt eine austenitische und/oder ferritische Gefügestruktur in dem Stahlband eingestellt werden. Um beispielsweise eine ferritische Gefügestruktur in dem Stahlband zu erzeugen, wird das austenitisch oder ferritisch warm vorgewalzte Stahlband über die Kühleinrichtung abgekühlt, bevor es in dem Walzgerüst des Walzmoduls sodann, vorzugsweise in einem Temperaturbereich von 700 bis 780 °C ferritisch fertig gewalzt wird. Soll hingegen eine austenitische Gefügestruktur in dem Stahlband eingestellt werden, so wird das austenitisch oder ferritisch warm vorgewalzte Stahlband über die Heizeinrichtung erwärmt, bevor es in dem Walzgerüst des Walzmoduls, vorzugsweise oberhalb einer Temperatur von 850 °C austenitisch fertig gewalzt wird.

Weitere vorteilhafte Ausgestaltungen der Erfindung sind in den abhängig formulierten Ansprüchen angegeben. Die in den abhängig formulierten Ansprüchen einzeln aufgeführten Merkmale sind in technologisch sinnvoller Weise miteinander kombinierbar und können weitere Ausgestaltungen der Erfindung definieren. Darüber hinaus werden die in den Ansprüchen angegebenen Merkmale in der Beschreibung näher präzisiert und erläutert, wobei weitere bevorzugte Ausgestaltungen der Erfindung dargestellt werden.

### Fiqurenbezeichnunq

Die Erfindung sowie das technische Umfeld werden nachfolgend anhand der Figuren näher erläutert. Es ist darauf hinzuweisen, dass die Erfindung durch die gezeigten Ausführungsbeispiele nicht beschränkt werden soll. Insbesondere ist es, soweit nicht explizit anders dargestellt, auch möglich, Teilaspekte der in den Figuren erläuterten Sachverhalte zu extrahieren und mit anderen Bestandteilen und Erkenntnissen aus der vorliegenden Beschreibung und/oder Figuren zu kombinieren. Insbesondere ist darauf hinzuweisen, dass die Figuren und insbesondere die dargestellten Größenverhältnisse nur schematisch sind. Gleiche Bezugszeichen bezeichnen gleiche Gegenstände, so dass ggf. Erläuterungen aus anderen Figuren ergänzend herangezogen werden können. Es zeigen:
Fig. 1 eine erste Ausführungsvariante des erfindungsgemäßen Verfahrens und
Fig. 2 eine zweite Ausführungsvariante des erfindungsgemäßen Verfahrens.

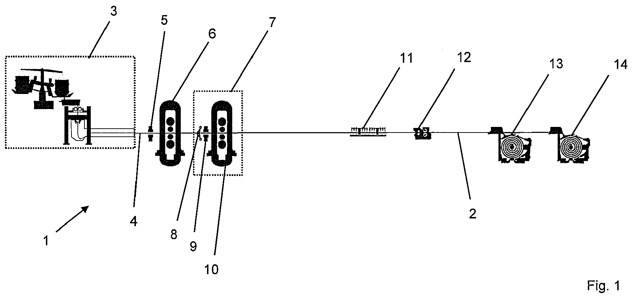

In Figur 1 ist eine Ausführungsvariante einer Anlage 1 gezeigt, mittels deren ein Stahlband 2 mit einer austenitischen und/oder ferritischen Gefügestruktur mit einer Dicke von kleiner 1.0 mm durch endloses Gießen und anschließendes Flachwalzen hergestellt werden kann.

In der vorliegend dargestellten Ausführungsvariante umfasst die Anlage 1 eine Gießeinrichtung 3, die kontinuierlich mit einem schmelzflüssigen Stahl versorgt wird. Über die Gießeinrichtung 3 wird zunächst ein Stahlrohband 4 mit einer Dicke im Bereich von 1.50 bis 4.0 mm kontinuierlich gegossen. In Bandlaufrichtung hinter der Gießeinrichtung 3 ist eine erste Heizeinrichtung 5 angeordnet, über die das Stahlrohband 4 vor dem ersten Walzstich aufgeheizt werden kann, sofern die Temperatur unterhalb 700 °C betragen sollte und/oder sofern der erste Umformschritt im austenitischen Gefügebereich durchgeführt werden soll. Die erste Heizeinrichtung 5 kann beispielsweise in Form einer induktiven Heizeinrichtung ausgeführt sein. Ferner umfasst die Anlage 1 ein erstes Warmwalzgerüst 6, welches mit der Gießeinrichtung 3 unmittelbar gekoppelt ist. Mit dem Begriff "unmittelbar gekoppelt" wird im Sinne der vorliegenden Erfindung verstanden, dass das erste Warmwalzgerüst 6 in Bandlaufrichtung direkt hinter der Gießeinrichtung 3 angeordnet ist, so dass das durch die Gießeinrichtung 3 erzeugte Stahlrohband 4 direkt und somit im austenitischen und/oder ferritischen Gefügebereich warm vorgewalzt werden kann.

Ferner umfasst die Anlage 1 in Bandlaufrichtung hinter dem ersten Warmwalzgerüst 6 ein erstes Walzmodul 7, welches in dieser Reihenfolge eine erste Kühleinrichtung 8, eine zweite Heizeinrichtung 9 sowie ein zweites Warmwalzgerüst 10 aufweist, mit dem das austenitisch und/oder ferritisch vorgewalzte Stahlband 2 im austenitischen und/oder ferritischen Gefügebereich zu dem Stahlband 2 warm fertiggewalzt wird. Auch die zweite Heizeinrichtung 9 kann beispielsweise in Form einer induktiven Heizeinrichtung ausgeführt sein. Die erste Kühleinrichtung 10 kann beispielsweise in Form einer Zwischengerüstkühlung ausgebildet sein.

In Bandlaufrichtung hinter dem ersten Walzmodul 7 umfasst die Anlage 1 zunächst einen Kühlabschnitt 11, der vorzugsweise in Form einer Sprühkühlung ausgeführt ist und mittels dem das auf die gewünschte Endbanddicke, beispielsweise eine Endbanddicke von 0.4 mm, gewalzte Stahlband 2, aufgrund der sehr kleinen Dicke, behutsam gekühlt werden kann. Anschließend durchläuft das Stahlband 2 eine Trenneinrichtung 12, die beispielsweise aus einer fliegenden Schere bestehen kann, und wird über eine erste und/oder eine zweite Coileinrichtung 13, 14 zu einem Coil aufgewickelt.

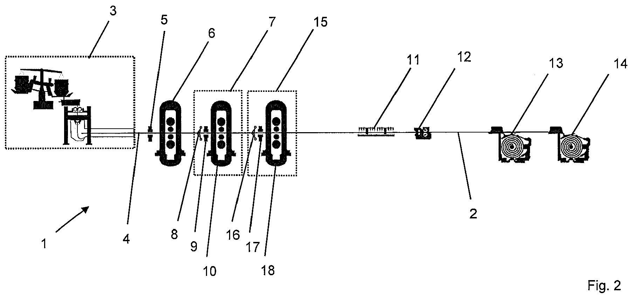

In Figur 2 ist eine zweite Ausführungsvariante der erfindungsgemäßen Anlage 1 gezeigt, die im Unterschied zu der ersten Ausführungsvariante ein zweites Walzmodul 15 umfasst, das ebenfalls eine sodann zweite Kühleinrichtung 16, eine dritte Heizeinrichtung 17 sowie ein drittes Warmwalzgerüst 18 aufweist, über das ein Walzen im austenitischen und/oder ferritischen Gefügebereich ermöglicht wird.

### Beispiele

### Beispiel 1:

Zur Herstellung eines Stahlbandes 2 mit einer rein austenitischen Gefügestruktur wurde mittels der in Figur 1 gezeigten Anlage 1 zunächst ein Stahlrohband 4 mit einer Dicke von 2.0 mm und einer Breite von 1100 mm gegossen. Das Stahlrohband 4 hatte beim Verlassen der Gießeinrichtung 3 eine Temperatur von 1250 °C und wurde sodann über eine Induktionsheizung 5 von einer Eingangstemperatur von 1157 °C auf 1246 °C aufgeheizt. Anschließend wurde das Stahlrohband 4 bei einer Walzgeschwindigkeit von 2.52 m/s in dem ersten Warmwalzgerüst 6 mit einer Abnahme von 55 % austenitisch warm vorgewalzt, wobei die Eingangstemperatur 1130 °C und die Ausgangstemperatur 971 °C betrug. Das sodann erhaltene 0.9 mm Dicke austenitisch vorgewalzte Stahlband 2 wurde anschließend über das erste Walzmodul 7 fertiggewalzt, indem es zunächst über die Induktionsheizung 9 von 938 °C auf eine Temperatur von 1051 °C aufgeheizt und sodann bei einer Walzgeschwindigkeit von 3.78 m/s in dem zweiten Warmwalzgerüst 10 mit einer Abnahme von 33 % austenitisch warm fertiggewalzt worden ist. Die Eingangstemperatur in das zweite Warmwalzgerüst 10 betrug 992 °C und die Ausgangstemperatur 882 °C. Das so erhaltene Stahlband 2, welches eine Endbanddicke von 0.6 mm aufwies, wurde anschließend gekühlt und zu einem Coil aufgewickelt.

### Beispiel 2:

Zur Herstellung eines Stahlbandes 2 mit einer rein ferritischen Gefügestruktur wurde mittels der in Figur 1 gezeigten Anlage 1 zunächst ein Stahlrohband 4 mit einer Dicke von 2.0 mm und einer Breite von 1100 mm gegossen. Das Stahlrohband 4 hatte beim Verlassen der Gießeinrichtung 3 eine Temperatur von 1250 °C und wurde aufgrund der ausreichenden hohen Temperatur ohne Aufheizen dem Warmwalzgerüst 6 zugeführt und bei einer Walzgeschwindigkeit von 2.22 m/s in diesem mit einer Abnahme von 55 % austenitisch warm vorgewalzt, wobei die Eingangstemperatur 1020 °C und die Ausgangstemperatur 882 °C betrug. Das sodann erhaltene 0.9 mm Dicke austenitisch vorgewalzte Stahlband 2 wurde anschließend über das erste Walzmodul 7 ferritisch fertiggewalzt, indem es zunächst über die Kühleinrichtung 8 von 794 °C auf eine Temperatur von 785 °C abgekühlt und sodann bei einer Walzgeschwindigkeit von 3.33 m/s in dem zweiten Warmwalzgerüst 10 mit einer Abnahme von 33 % warm fertiggewalzt worden ist. Die Eingangstemperatur in das zweite Warmwalzgerüst 10 betrug 757 °C und die Ausgangstemperatur 705 °C. Das so erhaltene Stahlband 2, welches eine Endbanddicke von 0.6 mm aufwies wurde anschließend gekühlt und zu einem Coil aufgewickelt.

### Bezugszeichen

- 1: Anlage
- 2: Stahlband
- 3: Gießeinrichtung
- 4: Stahlrohband
- 5: erste Heizeinrichtung / Induktionsheizung
- 6: erstes Warmwalzgerüst
- 7: (erstes) Walzmodul
- 8: erste Kühleinrichtung
- 9: zweite Heizeinrichtung / Induktionsheizung
- 10: zweites Warmwalzgerüst
- 11: Kühlabschnitt / Sprühkühlung
- 12: Trenneinrichtung /
- 13: erste Coileinrichtung
- 14: zweite Coileinrichtung
- 15: zweites Walzmodul
- 16: zweite Kühleinrichtung
- 17: dritte Heizeinrichtung
- 18: drittes Warmwalzgerüst

## Patentansprüche

1. Verfahren zur Herstellung eines ultradünnen Stahlbandes (2) mit einer austenitischen und/oder ferritischen Gefügestruktur und einer Dicke von kleiner 0.8 mm, wobei zunächst in einer Gießeinrichtung (3) ein Stahlrohband (4) mit einer Dicke im Bereich von 1.50 bis 4.0 mm kontinuierlich gegossen wird, und sodann direkt im austenitischen und/oder im ferritischen Gefügebereich, vorzugsweise oberhalb einer Temperatur von mindestens 700 °C, mittels zumindest eines mit der Gießeinrichtung (3) gekoppelten Warmwalzgerüstes (6) zu dem Stahlband (2) warm vorgewalzt wird,
**dadurch gekennzeichnet, dass**
das warm vorgewalzte Stahlband (2) über zumindest ein Walzmodul (7), welches in dieser Reihenfolge eine Kühleinrichtung (8), eine Heizeinrichtung (9) sowie ein Warmwalzgerüst (10) aufweist, und unmittelbar nach dem mit der Gießeinrichtung (3) gekoppelten Warmwalzgerüst (6) angeordnet ist, zu dem ultradünnen Stahlband (2) austenitisch und/oder ferritisch warm fertiggewalzt wird.

2. Verfahren nach Anspruch 1, wobei das warm vorgewalzte Stahlband (2) über zumindest zwei, bevorzugt zumindest drei, jeweils hintereinander angeordnete Walzmodule (7, 15) fertiggewalzt wird, wobei jedes der Walzmodule (7, 15) in dieser Reihenfolge eine Kühleinrichtung (8, 16), eine Heizeinrichtung (9, 17) sowie ein Warmwalzgerüst (10, 18) aufweist.

3. Verfahren nach Anspruch 1 oder 2, wobei das ultradünne Stahlband (2) nach dem zumindest einem Walzmodul (7), vorzugsweise nach dem letzten Walzmodul (15), über zumindest einen Kühlabschnitt (11) auf eine Wickeltemperatur abgekühlt wird.

4. Verfahren nach einem der vorhergehenden Ansprüche, wobei das Stahlrohband (4) über mindestens eine vor dem mit der Gießeinrichtung (3) gekoppelten Warmwalzgerüst (6) angeordnete Heizeinrichtung (5) aufgeheizt wird.

## Claims

1. Method for production of an ultra-thin steel strip (2) with an austenitic and/or ferritic microstructure and a thickness of less than 0.8 millimetres, wherein initially in a casting direction (3) a raw steel strip (4) with a thickness in the range of 1.50 to 4.0 millimetres is continuously cast and then directly hot rough-rolled in the austenitic and/or ferritic structural range, preferably above a temperature of at least 700° C and by means of at least one hot-rolling stand (6) coupled to the casting device (3), to form the steel strip (2),
**characterised in that**
the hot rough-rolled steel strip (2) is hot-rolled austenitically and/or ferritically to finished state by way of at least one rolling module (7), which comprises a cooling device (8), a heating device (9) and a hot-rolling stand (10) **in that** sequence and which is arranged directly after the hot-rolling stand (6) coupled to the casting device (3), to form the ultra-thin steel strip (2).

2. Method according to claim 1, wherein the hot rough-rolled steel strip (2) is rolled to finished state by way of at least two, preferably at least three, rolling modules (7, 15) respectively arranged in succession, wherein each of the rolling modules (7, 15) comprises a cooling device (8, 16), a heating device (9, 17) and a hot rolling stand (10, 18) in that sequence.

3. Method according to claim 1 or 2, wherein the ultra-thin steel strip (2) is cooled down by way of at least one cooling section (11) to a winding temperature after the at least one rolling module (7), preferably after the last rolling module (15).

4. Method according to any one of the preceding claims, wherein the raw steel strip (4) is heated up by way of at least one heating device (5) arranged in front of the hot-rolling stand (6) coupled to the casting device (3).

## Revendications

1. Procédé de fabrication d'une bande d'acier ultramince (2) ayant une structure de grain austénitique et/ou ferritique et une épaisseur inférieure à 0,8 mm, où d'abord une bande brute d'acier (4) ayant une épaisseur dans la plage de 1,50 à 4,0 mm est coulée en continu dans un dispositif de coulée (3), et est ensuite pré-laminée à chaud directement dans la zone de grain austénitique et/ou ferritique, de préférence à une température d'au moins 700 °C, pour former la bande d'acier (2) au moyen d'au moins un train de laminage à chaud (6) couplé au dispositif de coulée (3),
**caractérisé en ce que**
la bande d'acier pré-laminée à chaud (2) est finie à chaud en bande d'acier ultramince (2) austénitique et/ou ferritique via au moins un module de laminage (7), qui comprend dans cet ordre un dispositif de refroidissement (8), un dispositif de chauffage (9) ainsi qu'un train de laminage à chaud (10), et est disposé immédiatement en aval du train de laminage à chaud (6) couplé au dispositif de coulée (3).

2. Procédé selon la revendication 1, où la bande d'acier pré-laminée à chaud (2) est finie à chaud via au moins deux, de préférence au moins trois, modules de laminage (7, 15) disposés consécutivement, chaque module de laminage (7, 15) comprenant dans cet ordre un dispositif de refroidissement (8, 16), un dispositif de chauffage (9, 17) ainsi qu'un train de laminage à chaud (10, 18).

3. Procédé selon la revendication 1 ou 2, où la bande d'acier ultramince (2) est refroidie à une température de bobinage en aval de l'au moins un module de laminage (7), de préférence en aval du dernier module de laminage (15), via au moins une section de refroidissement (11).

4. Procédé selon l'une des revendications précédentes, où la bande brute d'acier (4) est chauffée via au moins un dispositif de chauffage (5) disposé en amont du train de laminage à chaud (6) couplé au dispositif de coulée (3).
